(19) Europäisches Patentamt
European Patent Office
Office européen des brevets

(11) EP 4 578 890 A1

(12) EUROPEAN PATENT APPLICATION
published in accordance with Art. 153(4) EPC

(43) Date of publication:
02.07.2025 Bulletin 2025/27

(21) Application number: 23857378.6

(22) Date of filing: 23.08.2023

(51) International Patent Classification (IPC):
*C08G 64/04* (2006.01) *C08J 5/18* (2006.01)
*C08L 69/00* (2006.01)

(52) Cooperative Patent Classification (CPC):
C08G 64/04; C08J 5/18; C08L 69/00

(86) International application number:
PCT/JP2023/030291

(87) International publication number:
WO 2024/043270 (29.02.2024 Gazette 2024/09)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 24.08.2022 JP 2022133224

(71) Applicant: MITSUBISHI GAS CHEMICAL COMPANY, INC.
Chiyoda-ku
Tokyo 100-8324 (JP)

(72) Inventor: GOTO, Toshihito
Kamisu-shi, Ibaraki 314-0102 (JP)

(74) Representative: Hoffmann Eitle
Patent- und Rechtsanwälte PartmbB
Arabellastraße 30
81925 München (DE)

# (54) POLYCARBONATE RESIN, RESIN SOLUTION, AND FILM

(57) According to one embodiment, provided is a polycarbonate resin, comprising:
a constituent unit (A) derived from a monomer represented by the following formula (1),
a constituent unit (B) derived from a monomer represented by the following formula (2), and
a constituent unit (C) derived from a monomer represented by the following formula (3) and/or a constituent unit (D) derived from a monomer represented by the following formula (4):

EP 4 578 890 A1

[Formula 1]

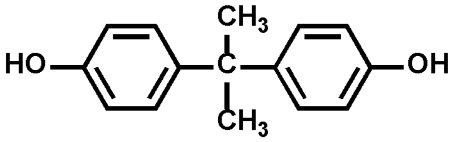

(1) BPA

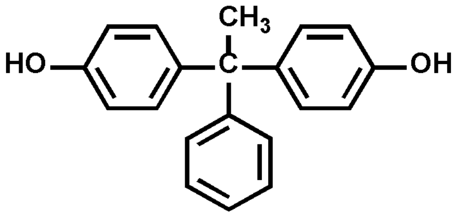

(2) BPAP

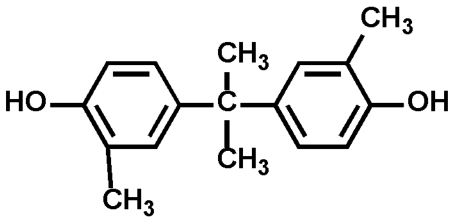

(3) BPC

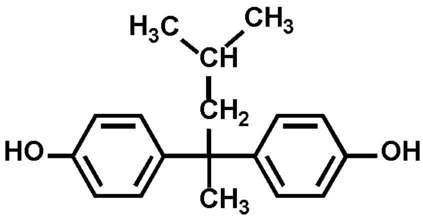

(4) MIBK

## Description

### Technical Field

The present invention relates to a polycarbonate resin, a resin solution containing the resin, and a film produced using the resin solution.

### Background Art

Polycarbonate resin is widely used in electrical and electronic equipment and office automation equipment, optical media, automobile parts, building materials, etc., because of its excellent mechanical strength, heat resistance, electrical properties, dimensional stability, flame retardancy, transparency, etc. (for example, Patent Literatures 1 to 7).

When the polycarbonate resin is molded into a film, the production method is broadly divided into extrusion molding and wet molding. When a polycarbonate resin having excellent heat resistance, that is, having a high glass transition temperature (Tg), is molded into a film, wet molding is generally adopted. **In** order to efficiently wet mold such a resin, it is preferable that an organic solvent having a relatively low boiling point is used, and that the resin is dissolved in the solvent at a high concentration (for example, 20% by mass or more of the resin is dissolved in the solvent). Conventionally, halogen-based solvents have been used as low-boiling point solvents for polycarbonate resins having a high glass transition temperature. However, in recent years, from environmental consideration, there has been a demand to use non-halogen-based solvents that do not contain halogens.

As such non-halogen solvents having a low boiling point, ketone solvents and ester solvents have been known. However, there has been a case where conventional known polycarbonate resins having a high glass transition temperatures have poor solubility in these solvents. Thus, when non-halogen-based solvents are used in consideration of the environment, it has been problematic that the molding efficiency of wet molding is poor. **In** order to solve such a problem, a high Tg polycarbonate resin with improved solubility particularly in non-halogen-based solvents having a low boiling point has been proposed (Patent Literature 8).

Furthermore, under the current circumstances, it has been desired to develop a polycarbonate resin that can be supplied stably at a lower price, in addition to having the above-mentioned solvent solubility.

### Citation List

#### Patent Literature

Patent Literature 1: JP Patent Publication (Kokai) No. 63-89540 A (1988)
Patent Literature 2: JP Patent Publication (Kokai) No. 2-99521 A (1990)
Patent Literature 3: JP Patent Publication (Kokai) No. 2-128336 A (1990)
Patent Literature 4: JP Patent Publication (Kokai) No. 2017-031245 A
Patent Literature 5: JP Patent Publication (Kokai) No. 2011-246583 A
Patent Literature 6: JP Patent Publication (Kokai) No. 2010-143950 A
Patent Literature 7: JP Patent Publication (Kokai) No. 2011-027940 A
Patent Literature 8: International Publication WO2020/250732

### Summary of Invention

#### Technical Problem

It is an object of the present invention to provide a polycarbonate resin having excellent solvent solubility.

#### Solution to Problem

The present inventors have conducted intensive studies regarding a polycarbonate resin, in which bisphenol A (hereinafter also referred to as "BPA") an inexpensive raw material that can be stably supplied. It has been conventionally considered that the polycarbonate resin using BPA as a raw material is inexpensive but is poor in terms of solvent solubility. However, contrary to such findings, the present inventors have discovered that a polycarbonate resin having excellent solvent solubility can be produced although BPA is used as a main raw material. The present invention is, for example, as follows.

[1] A polycarbonate resin, comprising:

a constituent unit (A) derived from a monomer represented by the following formula (1),
a constituent unit (B) derived from a monomer represented by the following formula (2), and
a constituent unit (C) derived from a monomer represented by the following formula (3) and/or a constituent unit (D) derived from a monomer represented by the following formula (4),

wherein
the percentage of the constituent unit (A) is 50% to 65% by mass, the percentage of the constituent unit (B) is 10% to 30% by mass, and the total percentage of the constituent units (C) and (D) is 5% to 30% by mass, with respect to the total of the constituent units (A), (B), (C), and (D) that constitute the resin:

[Formula 1]

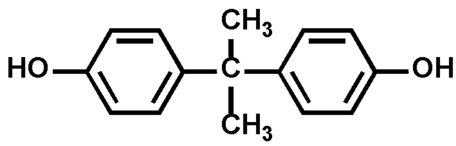

(1) BPA

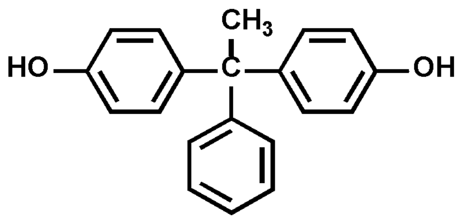

(2) BPAP

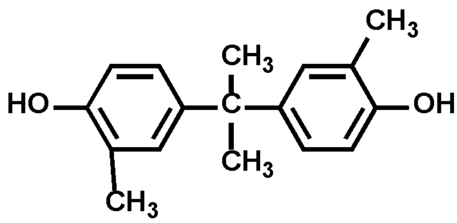

(3) BPC

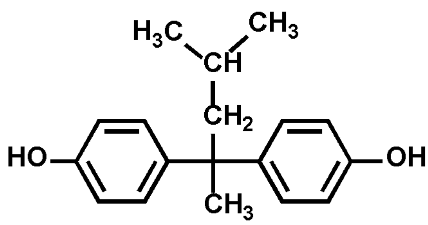

(4) MIBK

[2] The polycarbonate resin according to the above [1], comprising the constituent unit (A) derived from the monomer represented by the above formula (1), the constituent unit (B) derived from the monomer represented by the above formula (2), and the constituent unit (C) derived from the monomer represented by the above formula (3).
[3] The polycarbonate resin according to the above [1], comprising the constituent unit (A) derived from the monomer represented by the above formula (1), the constituent unit (B) derived from the monomer represented by the above formula (2), and the constituent unit (D) derived from the monomer represented by the above formula (4).
[4] The polycarbonate resin according to the above [1], comprising the constituent unit (A) derived from the monomer represented by the above formula (1), the constituent unit (B) derived from the monomer represented by the above formula (2), the constituent unit (C) derived from the monomer represented by the above formula (3), and the constituent unit (D) derived from the monomer represented by the above formula (4).
[4-1] The polycarbonate resin according to any one of the above [1] to [4], comprising a structure derived from p-t-butylphenol at the end thereof.
[5] The polycarbonate resin according to any one of the above [1] to [4-1], which has a viscosity average molecular weight (Mv) of 10,000 to 80,000.

[6] The polycarbonate resin according to any one of the above [1] to [5], which has a glass transition temperature (Tg) of 140 C to 160°C.

[7] A resin solution, comprising a non-halogen-based organic solvent and the polycarbonate resin according to the above [1] to [6] dissolved in the non-halogen-based organic solvent.

[8] The resin solution according to the above [7], wherein the polycarbonate resin is comprised in the resin solution in an amount of 20% by mass or more.

[9] The resin solution according to the above [7] or [8], wherein the non-halogen-based organic solvent is at least one of a ketone solvent and an ester solvent.

[9-1] The resin solution according to the above [9], wherein the non-halogen-based organic solvent is at least one of methyl ethyl ketone, ethyl acetate, ethyl carbitol acetate, and 2-methoxy-1-methylethyl acetate.

[10] A film produced using the resin solution according to any one of the above [7] to [9-1].

[11] A method for producing a film, comprising wet molding the resin solution according to any one of the above [7] to [9-1].

Advantageous Effects of Invention

According to the present invention, a polycarbonate resin having excellent solvent solubility can be provided.

Description of Embodiments

Hereafter, the embodiments of the present invention will be described in detail.

According to one embodiment, the polycarbonate resin of the present invention comprises:

a constituent unit (A) derived from a monomer represented by the following formula (1),
a constituent unit (B) derived from a monomer represented by the following formula (2), and
a constituent unit (C) derived from a monomer represented by the following formula (3) and/or a constituent unit (D) derived from a monomer represented by the following formula (4).

With respect to the total of the constituent units (A), (B), (C), and (D) that constitute the resin, the percentage of the constituent unit (A) is 50% to 65% by mass, the percentage of the constituent unit (B) is 10% to 30% by mass, and the total percentage of the constituent units (C) and (D) is 5% to 30% by mass.

[Formula 2]

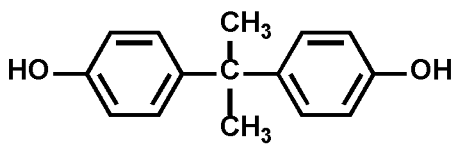

(1) BPA

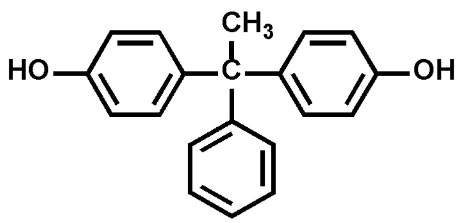

(2) BPAP

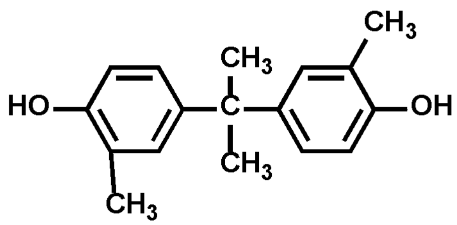

(3) BPC

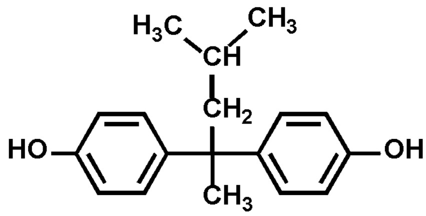

(4) MIBK

The present inventors have found that the polycarbonate resin having the above-described structure has excellent solvent solubility. In order to obtain a polycarbonate resin material having excellent heat resistance, a polycarbonate resin having a high glass transition temperature is used. When a polycarbonate resin having a high glass transition temperature is molded, in particular, in the case of wet molding, it is preferable that an organic solvent having a relatively low boiling point is used, and that the resin is dissolved in the solvent at a high concentration (for example, 20% by mass or more of the resin is dissolved in the solvent). Thereby, the polycarbonate resin can be efficiently molded.

As such a low-boiling-point solvent for polycarbonate resins having a high glass transition temperature, a halogen-based solvent has been conventionally used. From environmental consideration, however, it is preferable to use a non-halogen-based solvent that does not contain halogen. However, the conventionally used polycarbonate resin having a high glass transition temperature has poor solvent solubility, in particular, poor solubility in a non-halogen-based solvent, which has caused a problem in the molding process. In response to this problem, the present inventors have found that the polycarbonate resin according to the embodiment has excellent solvent solubility, while having a high glass transition temperature. The polycarbonate resin according to the embodiment can be dissolved in a solvent at a high concentration, and thus, the present polycarbonate resin can be efficiently molded, especially, according to wet molding. In addition, since the polycarbonate resin according to the embodiment also has excellent solubility in a non-halogen-based solvent, which has conventionally caused a problem, it is also preferable in terms of environmental consideration. Furthermore, the polycarbonate resin according to the embodiment also has excellent dissolution stability and can be stably preserved for a long period of time in the state of a resin solution in which the resin is dissolved in a solvent. If the polycarbonate resin according to the embodiment can be stably preserved for a long period of time in the state of a resin solution, it is possible to prepare the resin solution in advance and to use only the amount required each time, which becomes a great industrial advantage. On the other hand, if cloudiness (precipitation of the resin), etc. occurs during preservation, the resin concentration in the solution changes, which is not preferable. Therefore, if the polycarbonate resin could be stably preserved for a long period of time in the state of a resin solution, without generation of cloudiness, etc., it would be possible to efficiently provide uniform products.

A polycarbonate resin that is more inexpensive and can be stably supplied, in addition to having the above-mentioned properties, is demanded on the market. Bisphenol A (BPA) may be an example of a polycarbonate resin raw material having preferable properties such as low costs, high quality, and stable supply potential. However, it is known that a polycarbonate resin, in which a large amount of BPA is used as a raw material, has poor solvent solubility. Under such circumstances, the polycarbonate resin according to the embodiment was able to achieve high solvent solubility, despite using a large amount of BPA as a raw material. Since the polycarbonate resin according to the embodiment uses BPA as a main raw material, it is inexpensive and can be stably supplied to the market. That is to say, according to the embodiment of the present invention, a polycarbonate resin having excellent properties such as heat resistance, solvent solubility, and dissolution stability can be stably supplied at a low cost. The present invention has been achieved, contrary to the previous findings that a polycarbonate resin having a high glass transition temperature or a polycarbonate resin using a large amount of BPA as a raw material has poor solvent solubility, and thus, the present invention is extremely significant. Moreover, since the polycarbonate resin according to the embodiment can be wet molded using a non-halogen-based solvent, it has a great industrial advantage of being inexpensive and environmentally friendly.

The reason why the polycarbonate resin according to the embodiment has excellent solvent solubility is unknown, but it is predicted as follows. In the polycarbonate resin according to the embodiment, the content percentage of the constituent units (C) and (D) that can contribute to the improvement of the solvent solubility of the resin is relatively low, and the content percentage of the constituent unit (A) that is considered to not to contribute to the improvement of the solvent solubility is relatively high. The reason why excellent solvent solubility could be achieved despite such configuration of the present polycarbonate resin is assumed that the randomness of the structure of the polycarbonate chain was increased by allowing the polycarbonate resin to comprise three or more types of constituent units, and that it contributed to the improvement of solvent solubility.

Hereafter, individual components, production methods, physical properties, intended uses, etc. of the polycarbonate resin according to the embodiment will be described in detail.

[1] Polycarbonate resin

According to one embodiment, the polycarbonate resin of the present invention comprises:

a constituent unit (A) derived from a monomer represented by the following formula (1) (hereinafter also referred to as "bisphenol A" or "BPA"),
a constituent unit (B) derived from a monomer represented by the following formula (2) (hereinafter also referred to as "bisphenol AP" or "BPAP"), and
a constituent unit (C) derived from a monomer represented by the following formula (3) (hereinafter also referred to as "bisphenol C" or "BPC") and/or a constituent unit (D) derived from a monomer represented by the following formula (4) (hereinafter also referred to as "4,4'-(4-methylpentane-2,2-diyl)diphenol" or "MIBK").

In addition, with respect to the total of the constituent units (A), (B), (C), and (D) that constitute the resin, the percentage of the constituent unit (A) is 50% to 65% by mass, the percentage of the constituent unit (B) is 10% to 30% by mass, and the total percentage of the constituent units (C) and (D) is 5% to 30% by mass.

[Formula 3]

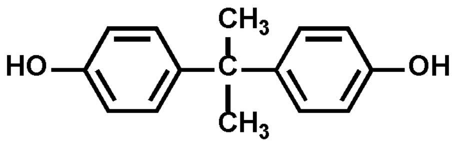

(1) BPA

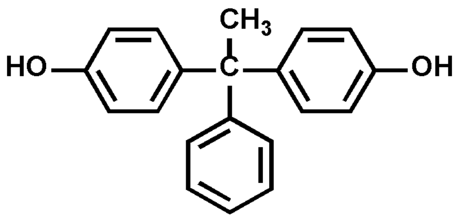

(2) BPAP

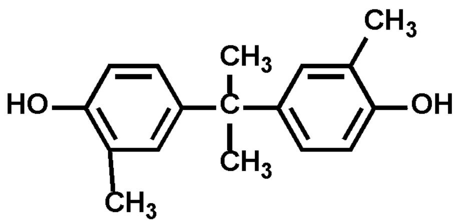

(3) BPC

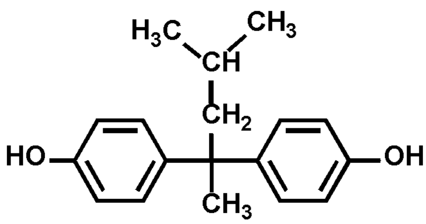

(4) MIBK

The percentage of the constituent unit (A) may be preferably 50% to 64% by mass, more preferably 55% to 62% by mass, and for example, 50% to 60% by mass, with respect to the total of the constituent units (A), (B), (C), and (D) that constitute the resin. The percentage of the constituent unit (B) may be preferably 10% to 25% by mass, more preferably 15% to 23% by mass, and for example, 10% to 20% by mass, with respect to the total of the constituent units (A), (B), (C), and (D) that constitute the resin. Since BPAP that constitutes the constituent unit (B) has a substituent containing an aromatic ring, the rotational potential energy of the molecular chain is increased, which may contribute to improvement of the glass transition temperature.

Either one or both of the constituent unit (C) and the constituent unit (D) are comprised in the polycarbonate resin. According to an embodiment comprising both the constituent unit (C) and the constituent unit (D), there is provided a

polycarbonate resin comprising the constituent unit (A) derived from the monomer represented by the above formula (1), the constituent unit (B) derived from the monomer represented by the above formula (2), the constituent unit (C) derived from the monomer represented by the above formula (3), and the constituent unit (D) derived from the monomer represented by the above formula (4).

Herein, the percentage of the constituent unit (A) may be 50% to 65% by mass, preferably 50% to 64% by mass, more preferably 55% to 62% by mass, and for example, 50% to 60% by mass, with respect to the total of the constituent units (A), (B), (C), and (D) that constitute the resin. The percentage of the constituent unit (B) may be 10% to 30% by mass, preferably 10% to 25% by mass, more preferably 15% to 23% by mass, and for example, 10% to 20% by mass, with respect to the total of the constituent units (A), (B), (C), and (D) that constitute the resin. The total percentage of the constituent units (C) and (D) may be preferably 10% to 25% by mass, more preferably 15% to 25% by mass, and for example, 10% to 20% by mass, with respect to the total of the constituent units (A), (B), (C), and (D) that constitute the resin. The total percentage of the constituent units (C) and (D) may be within the above-described range, and the configuration percentage of each of the constituent units (C) and (D) is not particularly limited.

The polycarbonate resin according to the embodiment may not comprise the constituent unit (D). Thus, according to another embodiment, there is provided a polycarbonate resin comprising the constituent unit (A) derived from the monomer represented by the above formula (1), the constituent unit (B) derived from the monomer represented by the above formula (2), and the constituent unit (C) derived from the monomer represented by the above formula (3). Herein, the percentage of the constituent unit (A) may be 50% to 65% by mass, preferably 50% to 64% by mass, more preferably 55% to 62% by mass, and for example, 50% to 60% by mass, with respect to the total of the constituent units (A), (B), and (C) that constitute the resin. The percentage of the constituent unit (B) may be 10% to 30% by mass, preferably 10% to 25% by mass, more preferably 15% to 23% by mass, and for example, 10% to 20% by mass, with respect to the total of the constituent units (A), (B), and (C) that constitute the resin. The percentage of the constituent unit (C) may be 5% to 30% by mass, preferably 10% to 25% by mass, more preferably 15% to 25% by mass, and for example, 10% to 20% by mass, with respect to the total of the constituent units (A), (B), and (C) that constitute the resin.

The polycarbonate resin according to the embodiment may not comprise the constituent unit (C). Thus, according to another embodiment, there is provided a polycarbonate resin comprising the constituent unit (A) derived from the monomer represented by the above formula (1), the constituent unit (B) derived from the monomer represented by the above formula (2), and the constituent unit (D) derived from the monomer represented by the above formula (4). Herein, the percentage of the constituent unit (A) may be 50% to 65% by mass, preferably 50% to 64% by mass, more preferably 55% to 62% by mass, and for example, 50% to 60% by mass, with respect to the total of the constituent units (A), (B), and (D) that constitute the resin. The percentage of the constituent unit (B) may be 10% to 30% by mass, preferably 10% to 25% by mass, more preferably 15% to 23% by mass, and for example, 10% to 20% by mass, with respect to the total of the constituent units (A), (B), and (D) that constitute the resin. The percentage of the constituent unit (D) may be 5% to 30% by mass, preferably 10% to 25% by mass, more preferably 15% to 25% by mass, and for example, 10% to 20% by mass, with respect to the total of the constituent units (A), (B), and (D) that constitute the resin.

The polycarbonate resin according to the embodiment may be any structure of random, block and alternating copolymers.

The polycarbonate resin according to the embodiment may comprise constituent units other than the above-mentioned constituent units (A) to (D). The total percentage of the constituent units (A) to (D) in the polycarbonate resin is preferably 70% to 100% by mass, and more preferably 80% to 100% by mass, with respect to the polycarbonate resin (100% by mass). By setting the total percentage of the constituent units (A) to (D) to be such a percentage, the effects of the present invention are more exhibited.

Examples of other constituent units may include constituent units derived from aliphatic dihydroxy compounds, and constituent units derived from aromatic dihydroxy compounds, which are generally used as constituent units of polycarbonate resins. Further examples may include constituent units derived from synthetic resins such as aromatic polyester, aliphatic polyester, polyamide, polystyrene, polyolefin, acryl, amorphous polyolefin, ABS and AS, biodegradable resins such as polylactic acid and polybutylene succinate, and rubbers.

[2] Method for producing polycarbonate resin

The method for producing a polycarbonate resin is not particularly limited, and the polycarbonate resin can be produced according to a conventionally known method using, as raw materials, a dihydroxy compound and a carbonate binder. Examples of the method for producing a polycarbonate resin may include methods of directly reacting a dihydroxy compound with phosgene or the like (an interfacial polymerization method and a phosgene method) and methods of transesterifying a dihydroxy compound and a carbonic acid diester in a molten state (a transesterification method and a melting method).

As such a dihydroxy compound, the compounds represented by the above-mentioned formulae (1) to (4) may be used. Other dihydroxy compounds may be used in combination, as necessary.

When the polycarbonate resin is produced by the interfacial polymerization method, in general, a dihydroxy compound is reacted with phosgene in the presence of an acid binder and a solvent. Examples of the acid binder may include alkali metal hydroxides such as pyridine, sodium hydroxide, and potassium hydroxide, and examples of the solvent may include methylene chloride and chloroform. In order to promote the condensation polymerization reaction, a tertiary amine catalyst such as triethylamine, quaternary ammonium salts such as benzyltriethylammonium chloride, etc. may also be used.

In the above-mentioned production method, it is preferable to further add a monofunctional group compound such as phenol, p-t-butylphenol (PTBP), p-cumylphenol, long-chain alkyl-substituted phenol, alkoxy-substituted phenol, or benzotriazole-substituted phenol to the reaction system as a molecular weight regulator (end terminator). Besides, the timing of adding the molecular weight regulator (end terminator) is not particularly limited, and it may be added during the reaction of the dihydroxy compound, or after the reaction of the dihydroxy compound.

The amount of the molecular weight regulator used is generally 0.95 moles or more, preferably 1.5 moles or more, and also it is generally 10 moles or less, preferably 5 moles or less, with respect to 100 moles of the dihydroxy compound.

By adding the molecular weight regulator, a terminal structure derived from the molecular weight regulator is introduced into the end of the polycarbonate resin (copolymer). In one embodiment, the terminal structure derived from the molecular weight regulator is comprised in an amount of generally 0.95 moles or more, preferably 1.5 moles or more, and also, in an amount of generally 10 moles or less, preferably 5 moles or less, with respect to 100 moles of the constituent units derived from the dihydroxy compound (i.e., the constituent units (A) to (D) and other constituent units derived from the dihydroxy compounds).

In one embodiment of the present invention, the terminal structure of the polycarbonate resin (copolymer) is induced from a compound selected from among phenol, p-t-butylphenol (PTBP), p-cumylphenol, long-chain alkyl-substituted phenol, alkoxy-substituted phenol, and benzotriazole-substituted phenol.

Addition of the molecular weight regulator is preferable because by adding the molecular weight regulator, the viscosity average molecular weight (Mv) of the polycarbonate resin can be adjusted to a desired range, and also unique physical properties derived from the structure of the molecular weight regulator can be imparted to the polycarbonate resin.

The alkoxy-substituted phenol may be, for example, a compound represented by the following general formula (T1)'.

[Formula 4]

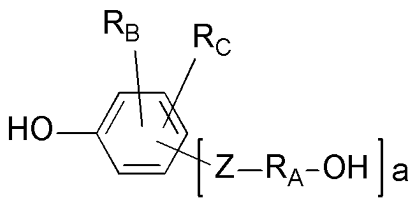

(T1)'

By using the compound represented by the above general formula (T1)', a terminal structure represented by the following general formula (T1) is introduced into the end of the main chain of the polycarbonate resin.

[Formula 5]

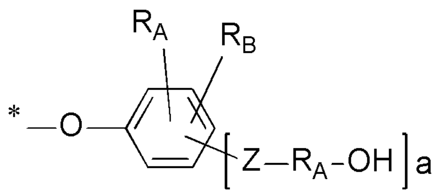

(T1)

In the above formula (T1)' and the above formula (T1),

$R_A$ represents an alkylene group containing 1 to 20 carbon atoms or an alkenylene group containing 2 to 20 carbon atoms, which may optionally have a substituent,
$R_B$ and $R_C$ each independently represent a hydrogen atom, an alkyl group containing 1 to 20 carbon atoms, an alkoxy group containing 1 to 10 carbon atoms, or an aryl group containing 6 to 12 carbon atoms,
Z represents an ether bond, a carbonyl group, an ester bond, or a single bond,
a represents an integer from 1 to 3, and
* represents the binding position with the main chain of the polycarbonate resin.

Examples of the compound represented by the above general formula (T1)' may include p-hydroxyphenethyl alcohol (PHEP), m-hydroxyphenethyl alcohol, o-hydroxyphenethyl alcohol, o-hydroxybenzyl alcohol (i.e., salicyl alcohol), p-hydroxybenzyl alcohol, m-hydroxybenzyl alcohol, vanillyl alcohol, homovanillyl alcohol, 3-(4-hydroxy-3-methoxyphenyl)-1-propanol, sinapyl alcohol, coniferyl alcohol, and p-coumaryl alcohol, but are not limited thereto. Among these, from the viewpoint of reactivity, p-hydroxyphenethyl alcohol and p-hydroxybenzyl alcohol are preferable, and p-hydroxyphenethyl alcohol is more preferable.

These alkoxy-substituted phenols are excellent in that they can introduce a hydroxyl group into the end of the main chain of the resulting polycarbonate resin, thereby imparting reactivity to the polycarbonate resin.

Alternatively, the molecular weight regulator may be a compound represented by the following general formula (T2)'.

[Formula 6]

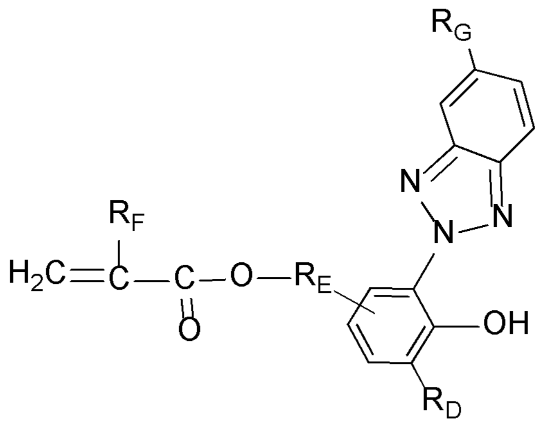

(T2)'

By using the compound represented by the above general formula (T2)', a terminal structure represented by the following general formula (T2) is introduced into the end of the main chain of the polycarbonate resin.

[Formula 7]

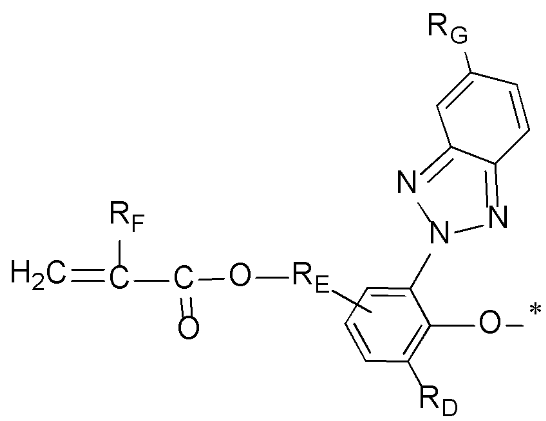

(T2)

**In** the above formula (T2)' and the above formula (T2), $R_D$ represents a hydrogen atom or an alkyl group containing 1 to 6 carbon atoms, $R_E$ represents an alkylene group containing 1 to 6 carbon atoms, $R_F$ represents a hydrogen atom or a methyl group, and $R_G$ represents a hydrogen atom or a halogen atom. * represents the binding position with the main chain of the polycarbonate resin.

Among others, as such a compound represented by the above general formula (T2)', a compound represented by the following general formula (T3)' is preferable. By mixing the compound represented by general formula (T3)', a terminal structure represented by the following general formula (T3) is introduced into the end of the main chain of the polycarbonate resin.

[Formula 8]

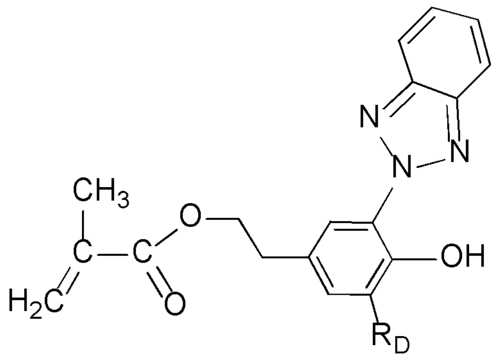

(T3)'

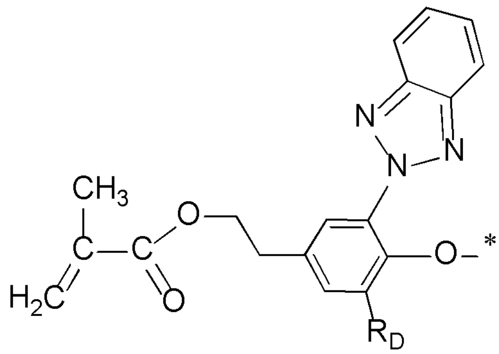

(T3)

In the above formula (T3)' and the above formula (T3), $R_D$ represents a hydrogen atom or an alkyl group containing 1 to 6 carbon atoms, and * represents the binding position with the main chain of the polycarbonate resin.

These benzotriazole-substituted phenols are excellent in that they can impart reactivity derived from the methacryl group and ultraviolet-absorbing performance derived from the benzotriazole group to the resulting polycarbonate resin.

In terms of the reactivity during the synthesis, the ease of availability, and costs, it is preferable to use a compound selected from the group consisting of p-t-butylphenol (PTBP), the compound represented by the above general formula (T1)' (in particular, p-hydroxyphenethyl alcohol (PHEP)), and the compound represented by the above general formula (T2)' (in particular, the compound represented by the above formula (T3)') as a molecular weight regulator.

In one embodiment of the present invention, the polycarbonate resin comprises the terminal structure represented by the above general formula (T1) (in particular, the terminal structure derived from p-hydroxyphenethyl alcohol (PHEP)), the terminal structure represented by the above general formula (T2) (in particular, the terminal structure represented by the above general formula (T3)), and a terminal structure represented by the following formula (T4).

[Formula 9]

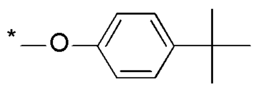

(T4)

In one embodiment of the present invention, the polycarbonate resin comprises the terminal structure represented by the above formula (T4). The terminal structure represented by the formula (T4) is obtained by adding, for example, p-t-butylphenol (PTBP).

In one embodiment of the present invention, the polycarbonate resin comprises the terminal structure represented by the above general formula (T1) (in particular, the terminal structure derived from p-hydroxyphenethyl alcohol (PHEP)).

In one embodiment of the present invention, the polycarbonate resin comprises the terminal structure represented by the above general formula (T2) (in particular, the terminal structure represented by the general formula (T3)).

In addition, an antioxidant such as sodium sulfite or hydrosulfite, and a branching agent such as phloroglucin, isatin bisphenol or trisphenolethane may be added in small amounts, as desired.

When the polycarbonate resin is produced by the transesterification method or the melting method, in general, a dihydroxy compound is reacted with a carbonic acid diester in the presence of a transesterification catalyst.
Specific examples of the carbonic acid diester may include aromatic carbonic acid diesters such as diphenyl carbonate, ditolyl carbonate, bis(2-chlorophenyl) carbonate, dinaphthyl carbonate, and bis(4-phenylphenyl) carbonate.
As such a transesterification catalyst, at least one of an alkali metal compound and an alkaline earth metal compound can be used. It is also possible to auxiliarily use a basic compound such as a basic boron compound, a basic phosphorus compound, a basic ammonium compound or an amine compound in combination. A single type of transesterification catalyst may be used, or multiple types of transesterification catalysts may also be used in combination.

[3] Physical properties of polycarbonate resin

The viscosity average molecular weight (Mv) of the polycarbonate resin according to the embodiment is preferably 10,000 to 80,000, and more preferably 15,000 to 60,000, in terms of the ease of handling of the resin solution. Also, in terms of the processability of the resulting film, it is preferably 16,000 to 50,000, and more preferably 18,000 to 32,000.
The viscosity average molecular weight (Mv) of the polycarbonate resin can be measured by the method described below.

(Conditions for measuring viscosity average molecular weight (Mv))

Measuring device: Ubbelohde capillary viscometer
Solvent: dichloromethane
Concentration of resin solution: 0.5 g/dL
Measurement temperature: 25°C

The measurement is carried out under the above-described conditions, the limiting viscosity [η] dL/gram is then obtained at a Huggins constant of 0.45, and the viscosity average molecular weight (Mv) is then calculated using the following formula:

[Expression 1]

$$\eta = 1.23 \times 10^{-4} \times Mv^{0.83}$$

The glass transition temperature (Tg) of the polycarbonate resin is preferably 140°C to 160°C, more preferably 143°C to 160°C, and particularly preferably 145°C to 155°C. The resin having a glass transition temperature that is within the above-described range is excellent in terms of heat resistance. In terms of heat resistance and the ease of molding, the glass transition temperature is preferably 145°C or higher, and more preferably 150°C or higher.
The glass transition temperature (Tg) of the polycarbonate resin can be measured by the method described below.

(Conditions for measuring glass transition temperature (Tg))

Measuring device: Differential scanning calorimeter (DSC)
Heating rate: 10°C/min
Gas flow environment: 20 ml/min nitrogen
Sample pre-treatment: heat melting at 300°C

As mentioned above, the polycarbonate resin according to the embodiment has excellent solvent solubility. From the viewpoint of improving efficiency during molding, it is preferable that the polycarbonate resin is dissolved in the resin solution at a concentration of 20% by mass or more, with respect to 100% by mass of the resin solution (the entire resin solution comprising resin, solvent, additives, etc.). In particular, it is desirable that the polycarbonate resin is dissolved in the resin solution, in which a non-halogen-based organic solvent (preferably, at least one of a ketone-based solvent and an ester-based solvent, as described later) is used as a solvent, at a concentration of preferably 20% by mass or more, more

preferably 25% by mass or more, in 100% by mass of the resin solution.

[4] Polycarbonate resin composition

To the polycarbonate resin, additives such as an antioxidant, a processing stabilizer, a light stabilizer, a polymerized metal-deactivating agent, a flame retardant, a lubricant, an antistatic agent, a surfactant, an antibacterial agent, a mold release agent, an ultraviolet absorber, a plasticizer, and a compatibilizer may be added within a range that does not impair the properties of the resin, so as to form a polycarbonate resin composition.

The polycarbonate resin can also be used as a polymer alloy by kneading it with one or two or more types of materials, including, for example, polycarbonates other than the polycarbonate resin according to the embodiment, synthetic resins such as aromatic polyester, aliphatic polyester, polyamide, polystyrene, polyolefin, acryl, amorphous polyolefin, ABS and AS, biodegradable resins such as polylactic acid and polybutylene succinate, rubbers, etc.

The method of blending various additives into the polycarbonate resin is not particularly limited, as long as it is a commonly used polymer blending method. Examples of the method of blending additives into the polycarbonate resin may include a method of mixing the additives into the polycarbonate resin using a tumbler, a V-type blender, a super mixer, a Nauta mixer, a Banbury mixer, a kneading roll, an extruder, or the like, and a method mixing the additives into the polycarbonate resin in a state in which the above-described individual components are dissolved in a common good solvent such as methylene chloride.

The polycarbonate resin or the polycarbonate resin composition can be used as a raw material for various molded bodies such as a film, a sheet, a disk, a lens, and a prism.

[5] Molded body

The polycarbonate resin according to the embodiment or a resin composition comprising the same can be molded into a molded body.

The method of molding the polycarbonate resin according to the embodiment or a resin composition comprising the same is not particularly limited, and the polycarbonate resin or the resin composition can be molded by various methods that are commonly used in the present technical field. Examples of the molding method may include: dry molding such as a compression molding method, a transfer molding method, an injection molding method, a blow molding method, an extrusion molding method, a lamination molding method, and a calendar molding method; and wet molding such as a solution casting method and a casting method.

Since the polycarbonate resin according to the embodiment is excellent in terms of solvent solubility and dissolution stability, it can be successfully molded, in particular, by wet molding. As a solvent that can be used in wet molding, any organic solvent can be used, as long as it can dissolve the polycarbonate resin according to the embodiment. In order to efficiently wet mold the resin, it is preferable to dissolve the resin in the organic solvent at a high concentration (for example, 20% by mass or more of the resin is dissolved in the solvent). The organic solvent can be appropriately selected and used from among solvents that are commonly used in the present technical field, and wet molding can be efficiently achieved by using a solvent with a relatively low boiling point. Among them, it is preferable to use a non-halogen-based organic solvent from the viewpoint of safety and health during wet molding and from the viewpoint of environmental protection. According to one embodiment of the present invention, a resin solution containing a non-halogen-based organic solvent and a polycarbonate resin dissolved in the non-halogen-based organic solvent is provided.

The non-halogen-based organic solvent is not particularly limited, and from the viewpoint of improving the efficiency of wet molding, it is preferable to use a solvent with a relatively low boiling point (a boiling point of, for example, 100°C or lower, preferably 90°C or lower, and more preferably 80°C or lower). Specific examples of the non-halogen-based organic solvent may include a ketone solvent, an ester solvent and an ether solvent, and a ketone solvent and an ester solvent are preferable.

Examples of the ketone solvent may include acetone, methyl ethyl ketone, methyl isobutyl ketone, cyclohexanone, and isophorone. Among them, methyl ethyl ketone is preferable because it has a low boiling point and the polycarbonate resin is highly dissolved therein.

Examples of the ester solvent may include methyl acetate, ethyl acetate, propyl acetate, butyl acetate, 2-ethoxyethyl acetate, 2-methoxy-1-methylethyl acetate, ethyl lactate, and ethyl carbitol acetate. Among them, ethyl acetate, ethyl carbitol acetate, and 2-methoxy-1-methylethyl acetate are preferable because they have a low boiling point and the polycarbonate resin is highly dissolved therein.

In one embodiment, the non-halogen-based organic solvent is at least one of methyl ethyl ketone, ethyl acetate, ethyl carbitol acetate, and 2-methoxy-1-methylethyl acetate.

The resin concentration in the resin solution (100% by mass) is generally 1% to 50% by weight. From the viewpoint of improving the efficiency of wet molding, the concentration of the polycarbonate resin in the resin solution is preferably 20% by mass or more. The concentration of the polycarbonate resin in the resin solution is more preferably 25%

by mass or more, and for example, 20% to 50% by mass, 20% to 30% by mass, or 25% to 50% by mass.

The concentration of the polycarbonate resin according to the embodiment dissolved in the resin solution is 20% by mass or more (i.e., 20% by mass of the polycarbonate resin is comprised in 100% by mass of the resin solution), as for at least one of the ketone solvent or the ester solvent. In a preferred embodiment, the concentration of the polycarbonate resin according to the embodiment dissolved in the resin solution is 20% by mass or more, as for both the ketone solvent and the ester solvent.

As described above, the polycarbonate resin according to the embodiment can be efficiently molded into a molded product (for example, a molded product that is in the shape of a film) by, for example, wet molding. Therefore, according to one embodiment of the present invention, a molded product obtained by wet molding the resin solution containing the polycarbonate resin, for example, a film produced using the resin solution containing the polycarbonate resin (by wet molding) is provided. According to a further embodiment of the present invention, a method for producing a molded product (for example, a film), comprising wet molding the resin solution containing the polycarbonate resin, is provided.

The shape, pattern, color, size, and the like of the molded product are not particularly limited, and they may be set arbitrarily according to the intended use. The polycarbonate resin according to the embodiment is particularly suitable as a film material for optical films, etc. Film molding by wet molding has the advantage that a thin film can be easily obtained and a non-oriented film can be obtained, as well as the advantage that a high-quality film can be obtained without coloring or gel generation during high-temperature melting. Therefore, the molded product is used, when a material having a particularly high glass transition temperature is molded into a film.

The molded product of the polycarbonate resin according to the embodiment can be utilized, for example, in electrical and electronic equipment and office automation equipment, optical media, automobile parts, building materials, etc. Specifically, the molded product can be preferably used in electrical and electronic equipment (for example, personal computers, game machines, television receivers, display devices such as liquid crystal displays and plasma displays, printers, copy machines, scanners, fax machines, electronic organizers and PDAs, electronic desk calculators, electronic dictionaries, cameras, video cameras, mobile phones, smartphones, tablets, battery packs, drives and readers for recording media, mice, numeric keypads, CD players, MD players, portable radios and audio players, etc.). In particular, the film produced by wet molding has favorable heat resistance and favorable transparency, and thus, the film is preferably used as a laminated film by laminating gas barrier films, solvent-resistant films, etc. on both sides of the film, or as a film for liquid crystal displays such as liquid crystal substrate films (plastic cell substrates) or retardation films, together with transparent conductive films and polarizing plates. Specifically, these films can be advantageously used in tablets, smartphones, handheld terminals, various display devices, etc. Besides, the film is used in an unstretched state for the plastic cell substrates, but in order to use the film as a retardation film, the film is stretched and oriented in, at least, one direction to obtain optimal birefringence characteristics, thereby preparing a retardation film. The film can be stretched by any known film-stretching method, and longitudinal uniaxial, transverse uniaxial, or multi-stage simultaneous biaxial stretching, etc. may be used.

## Examples

Hereinafter, the present invention will be described in detail in the following examples. However, the content of the present invention is not limited by these examples.

### (Example 1)

54.0 g (0.237 moles) of bisphenol A (BPA) manufactured by Mitsubishi Chemical Corporation, 18.0 g (0.062 moles) of bisphenol AP (BPAP) manufactured by Honshu Chemical Industry Co., Ltd., 18.0 g (0.070 moles) of bisphenol C (BPC) manufactured by Honshu Chemical Industry Co., Ltd., and 0.5 g of hydrosulfite were added and dissolved in 500 ml of 9% by mass of sodium hydroxide aqueous solution and 300 ml of pure water. To the thus obtained solution, 300 ml of dichloromethane was added, and while stirring, 51.1 g of phosgene was blown into the mixed solution over 40 minutes, while the solution temperature was kept in the range of 15°C to 25°C.

After the blowing of phosgene had been completed, 100 ml of 9 w/w% sodium hydroxide aqueous solution, 200 ml of dichloromethane, and 2.13 g (0.0142 moles) of p-t-butylphenol (PTBP) manufactured by Honshu Chemical Industry Co., Ltd. that had been dissolved in 100 ml of dichloromethane were added to the reaction solution, and was emulsified by vigorous stirring. Thereafter, 0.5 ml of triethylamine (TEA) was added thereto as a polymerization catalyst, and polymerization was then carried out for about 40 minutes.

The polymerization solution was separated into an aqueous phase and an organic phase, and then, the organic phase was neutralized with phosphoric acid and was repeatedly washed with pure water until the pH of the washing liquid became neutral. The organic solvent was distilled away from the thus prepared polycarbonate resin solution by evaporation, so as to obtain a powdered polycarbonate resin (PC-1).

The obtained polycarbonate resin was a random copolymer composed of a BPA-derived constituent unit (constituent unit (A)), a BPAP-derived constituent unit (constituent unit (B)), and a BPC-derived constituent unit (constituent unit (C)), and both ends thereof were structures derived from PTBP.

(Examples 2 to 12 and Comparative Examples 1 to 8)

Polycarbonate resins were produced in the same manner as that of Example 1, with the exception that the compounds shown in Table 1 were used as raw materials in the amounts described in Table 1.

[Table 1]

| | | Constituent Unit (A) | Constituent Unit (B) | Constituent Unit (C) | Constituent Unit (D) |
|---|---|---|---|---|---|
| | | (% by mass) | | | |
| | | BPA | BPAP | BPC | MIBK |
| Example 1 | PC-1 | 60 | 20 | 20 | 0 |
| Example 2 | PC-2 | 60 | 20 | 0 | 20 |
| Example 3 | PC-3 | 60 | 20 | 10 | 10 |
| Example 4 | PC-4 | 60 | 20 | 20 | 0 |
| Example 5 | PC-5 | 60 | 20 | 20 | 0 |
| Example 6 | PC-6 | 60 | 20 | 20 | 0 |
| Example 7 | PC-7 | 50 | 25 | 25 | 0 |
| Example 8 | PC-8 | 60 | 10 | 30 | 0 |
| Example 9 | PC-9 | 60 | 30 | 10 | 0 |
| Example 10 | PC-10 | 65 | 17.5 | 17.5 | 0 |
| Example 11 | PC-1 | 60 | 20 | 20 | 0 |
| Example 12 | PC-1 | 60 | 20 | 20 | 0 |
| Comp. Ex. 1 | PC-11 | 67 | 12 | 21 | 0 |
| Comp. Ex. 2 | PC-12 | 70 | 15 | 0 | 15 |
| Comp. Ex. 3 | PC-13 | 60 | 40 | 0 | 0 |
| Comp. Ex. 4 | PC-14 | 60 | 0 | 0 | 40 |
| Comp. Ex. 5 | PC-15 | 48 | 26 | 26 | 0 |
| Comp. Ex. 6 | PC-16 | 60 | 35 | 5 | 0 |
| Comp. Ex. 7 | PC-17 | 60 | 5 | 35 | 0 |
| Comp. Ex. 8 | PC-18 | 100 | 0 | 0 | 0 |

[Formula 10]

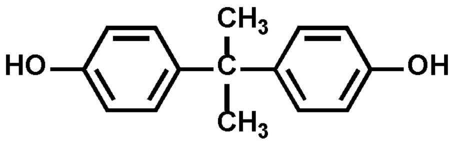

(1) BPA

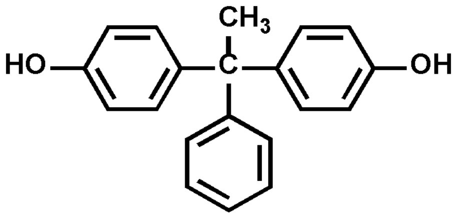

(2) BPAP

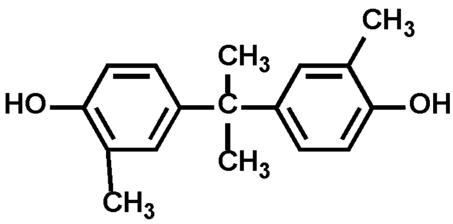

(3) BPC

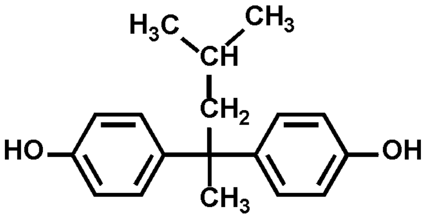

(4) MIBK

Herein, in Table 1, each numerical value (% by mass) means the percentage (% by mass) of the constituent unit derived from each compound, when the total of the constituent units derived from the compounds shown in Table 1 contained in the obtained resin is defined as 100% by mass. In other words, the resin of Example 1 contains 60% by mass of the constituent unit derived from BPA, 20% by mass of the constituent unit derived from BPAP, and 20% by mass of the constituent unit derived from BPC, when the total of the constituent units derived from BPA, BPAP, and BPC contained in the resin is defined as 100% by mass.

The physical properties of the resins obtained in the examples and the comparative examples are shown in Table 2 below. Individual physical properties were measured according to the following methods.

(1) Viscosity average molecular weight (Mv)

< Conditions for measuring viscosity average molecular weight (Mv) >

Measuring device: Ubbelohde capillary viscometer
Solvent: dichloromethane
Concentration of resin solution: 0.5 g/dL
Measurement temperature: 25°C

The measurement was carried out under the above-described conditions, the limiting viscosity [η] dL/gram was then obtained at a Huggins constant of 0.45, and the viscosity average molecular weight (Mv) was then calculated using the following formula:

[Expression 2]

$$\eta = 1.23 \times 10^{-4} \times Mv^{0.83}$$

(2) Glass transition temperature (Tg)

< Conditions for measuring glass transition temperature (Tg) >

Measuring device: Differential scanning calorimeter (DSC) (DSC-50, manufactured by Shimadzu Corporation)
Heating rate: 10°C/min
Gas flow environment: 20 ml/min nitrogen
Sample pre-treatment: heat melting at 300°C

(3) Solvent solubility and dissolution stability

The polycarbonate resins produced in the examples and the comparative examples were mixed with a solvent at room temperature, so that the concentration of each polycarbonate resin in the resin solution became 20% by mass (Examples 1 to 10 and Comparative Examples 1 to 8), 25% by mass (Example 11), or 30% by mass (Example 12). The used solvent used was methyl ethyl ketone (MEK), ethyl acetate (AcOEt), ethyl carbitol acetate (ECA), or 2-methoxy-1-methylethyl acetate (PGMEA). Solvent solubility and dissolution stability were evaluated according to the following criteria.

">20 days": No cloudiness was observed for more than 20 days after complete dissolution.
"~7 days": Cloudiness was observed within 4 to 7 days after complete dissolution.
"~3 days": Cloudiness was observed within 2 to 3 days after complete dissolution.
"~1 day": Cloudiness was observed within 1 day after complete dissolution.
"Not dissolved": Not completely dissolved, and some undissolved material was observed.

(4) Costs

The costs of the polycarbonate resins produced in the examples and the comparative examples were examined. The cost evaluation in Table 2 is as follows.

R1: Inexpensive to normal (less than 1000 yen/kg as a monomer cost)
R2: Slightly expensive (1000 yen to 1500 yen/kg as a monomer cost)
H: Expensive (more than 1500 yen/kg as a monomer cost)

[Table 2]

| | Mv (Ten thousand) | Tg (°C) | Solvent solubility and dissolution stability | | | | Costs |
|---|---|---|---|---|---|---|---|
| | | | MEK | Ethyl acetate | ECA | PGMEA | |
| Example 1 | 2.0 | 146 | >20 days | >20 days | >20 days | >20 days | R1 |
| Example 2 | 2.3 | 153 | >20 days | >20 days | >20 days | >20 days | R1 |
| Example 3 | 2.1 | 147 | >20 days | >20 days | >20 days | >20 days | R1 |
| Example 4 | 1.6 | 146 | >20 days | >20 days | >20 days | >20 days | R1 |
| Example 5 | 3.0 | 148 | >20 days | >20 days | >20 days | >20 days | R1 |
| Example 6 | 5.0 | 153 | >20 days | >20 days | >20 days | >20 days | R1 |
| Example 7 | 2.2 | 149 | >20 days | >20 days | >20 days | >20 days | R2 |
| Example 8 | 2.2 | 143 | >20 days | >20 days | >20 days | >20 days | R1 |
| Example 9 | 2.2 | 154 | >20 days | >20 days | >20 days | >20 days | R1 |

(continued)

| | Mv (Ten thousand) | Tg (°C) | Solvent solubility and dissolution stability | | | | Costs |
|---|---|---|---|---|---|---|---|
| | | | MEK | Ethyl acetate | ECA | PGMEA | |
| Example 10 | 2.2 | 150 | ~7 days | ~7 days | ~7 days | ~7 days | R1 |
| Example 11 | 2.0 | 146 | >20 days | >20 days | >20 days | >20 days | R1 |
| Example 12 | 2.0 | 146 | >20 days | >20 days | >20 days | >20 days | R1 |
| Comp. Ex. 1 | 2.2 | 142 | ~3 days | ~3 days | ~3 days | ~3 days | R1 |
| Comp. Ex. 2 | 2.2 | 151 | ~1 day | ~1 day | ~1 day | ~1 day | R1 |
| Comp. Ex. 3 | 2.3 | 165 | ~1 day | ~1 day | ~1 day | ~1 day | R1 |
| Comp. Ex. 4 | 2.2 | 138 | >20 days | >20 days | >20 days | >20 days | H |
| Comp. Ex. 5 | 2.1 | 148 | >20 days | >20 days | >20 days | >20 days | H |
| Comp. Ex. 6 | 2.2 | 157 | ~3 days | ~3 days | >20 days | >20 days | R1 |
| Comp. Ex. 7 | 2.1 | 139 | >20 days | ~1 day | ~1 day | ~1 day | R1 |
| Comp. Ex. 8 | 2.1 | 146 | Not dissolved | Not dissolved | Not dissolved | Not dissolved | R1 |

From Table 2, it is found that the resins of the examples have excellent solvent solubility and are relatively inexpensive. In addition, since the glass transition temperature is relatively high, the resins of the examples also have excellent heat resistance. Conventionally, it has been difficult that a polycarbonate resin having a high glass transition temperature is dissolved at a high concentration in an organic solvent having a relatively low boiling point. Contrary to such conventional findings, the carbonate resin according to the embodiment can be dissolved at a high concentration in an organic solvent having a relatively low boiling point, which is an environmentally friendly non-halogen-based solvent. By utilizing such properties, the polycarbonate resin according to the embodiment can be efficiently molded by wet molding. Furthermore, the polycarbonate resin according to the embodiment also has excellent dissolution stability and can be stably preserved for a long period of time in the state of a resin solution in which the resin is dissolved in a solvent.

On the other hand, it is found that the resins of the comparative examples have poor solvent solubility and/or poor dissolution stability. Since the resins of the comparative examples cannot be stably preserved in the state of a resin solution for a long period of time, it is necessary to shorten the resin solution preparation cycle, and it is also necessary to check whether cloudiness (precipitation of the resin) has occurred every time the resin solution is used. **In** particular, in the case of a resin solution in which cloudiness is observed within one day after the preparation, the resin solution needs to be used immediately after the preparation, which means that the resin solution must be prepared every time it is used, and it is not preferable from the viewpoint of practicality.

Several embodiments of the present invention have been described. These embodiments are presented as examples and are not intended to limit the scope of the invention. These novel embodiments can be carried out in various other forms, and various omissions, replacements and modifications can be made in a range that does not depart from the gist of the invention. These embodiments and variations thereof are included in the scope and gist of the invention, and are also included in the inventions recited in the claims and its equivalents thereof.

## Claims

**1.** A polycarbonate resin, comprising

a constituent unit (A) derived from a monomer represented by the following formula (1),
a constituent unit (B) derived from a monomer represented by the following formula (2), and
a constituent unit (C) derived from a monomer represented by the following formula (3) and/or a constituent unit (D) derived from a monomer represented by the following formula (4),
wherein
the percentage of the constituent unit (A) is 50% to 65% by mass, the percentage of the constituent unit (B) is 10% to 30% by mass, and the total percentage of the constituent units (C) and (D) is 5% to 30% by mass, with respect to the total of the constituent units (A), (B), (C), and (D) that constitute the resin:

[Formula 1]

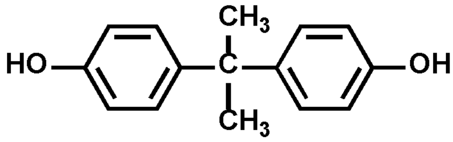

(1) BPA

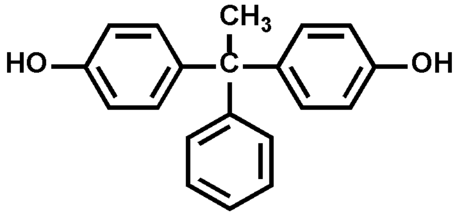

(2) BPAP

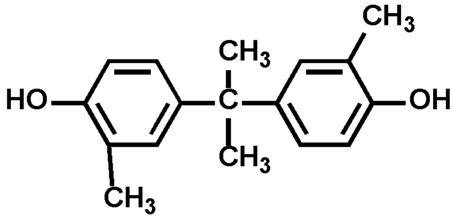

(3) BPC

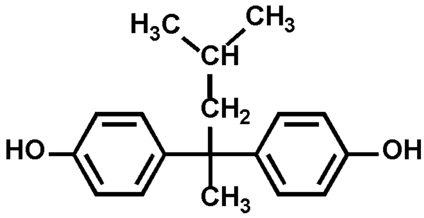

(4) MIBK

**2.** The polycarbonate resin according to claim 1, comprising the constituent unit (A) derived from the monomer represented by the above formula (1), the constituent unit (B) derived from the monomer represented by the above formula (2), and the constituent unit (C) derived from the monomer represented by the above formula (3).

**3.** The polycarbonate resin according to claim 1, comprising the constituent unit (A) derived from the monomer represented by the above formula (1), the constituent unit (B) derived from the monomer represented by the above formula (2), and the constituent unit (D) derived from the monomer represented by the above formula (4).

**4.** The polycarbonate resin according to claim 1, comprising the constituent unit (A) derived from the monomer represented by the above formula (1), the constituent unit (B) derived from the monomer represented by the above formula (2), the constituent unit (C) derived from the monomer represented by the above formula (3), and the constituent unit (D) derived from the monomer represented by the above formula (4).

**5.** The polycarbonate resin according to any one of claims 1 to 4, which has a viscosity average molecular weight (Mv) of 10,000 to 80,000.

**6.** The polycarbonate resin according to any one of claims 1 to 5, which has a glass transition temperature (Tg) of 140 C to 160°C.

**7.** A resin solution, comprising a non-halogen-based organic solvent and the polycarbonate resin according to claims 1 to 6 dissolved in the non-halogen-based organic solvent.

**8.** The resin solution according to claim 7, wherein the polycarbonate resin is comprised in the resin solution in an amount of 20% by mass or more.

**9.** The resin solution according to claim 7 or 8, wherein the non-halogen-based organic solvent is at least one of a ketone

solvent and an ester solvent.

**10.** A film produced using the resin solution according to any one of claims 7 to 9.

**11.** A method for producing a film, comprising wet molding the resin solution according to any one of claims 7 to 9.

## INTERNATIONAL SEARCH REPORT

International application No.
**PCT/JP2023/030291**

### A. CLASSIFICATION OF SUBJECT MATTER

***C08G 64/04***(2006.01)i; ***C08J 5/18***(2006.01)i; ***C08L 69/00***(2006.01)i
FI: C08G64/04; C08J5/18 CFD; C08L69/00

According to International Patent Classification (IPC) or to both national classification and IPC

### B. FIELDS SEARCHED

Minimum documentation searched (classification system followed by classification symbols)

C08G64/04; C08J5/18; C08L69/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| A | JP 2004-21045 A (MITSUBISHI CHEMICALS CORP.) 22 January 2004 (2004-01-22) | 1-11 |
| A | JP 2005-84274 A (MITSUBISHI GAS CHEM. CO., INC.) 31 March 2005 (2005-03-31) | 1-11 |
| A | JP 2003-195541 A (CANON INC.) 09 July 2003 (2003-07-09) | 1-11 |
| A | JP 2002-284871 A (MITSUBISHI GAS CHEM. CO., INC.) 03 October 2002 (2002-10-03) | 1-11 |
| A | JP 2001-26636 A (UNITIKA LTD.) 30 January 2001 (2001-01-30) | 1-11 |
| A | WO 2021/241378 A1 (MITSUBISHI GAS CHEM. CO., INC.) 02 December 2021 (2021-12-02) | 1-11 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **19 October 2023** | **31 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/030291**

| Patent document cited in search report | Publication date (day/month/year) | Patent family member(s) | Publication date (day/month/year) |
|---|---|---|---|
| JP 2004-21045 A | 22 January 2004 | (Family: none) | |
| JP 2005-84274 A | 31 March 2005 | (Family: none) | |
| JP 2003-195541 A | 09 July 2003 | (Family: none) | |
| JP 2002-284871 A | 03 October 2002 | US 2002/0132959 A1<br>EP 1223184 A1 | |
| JP 2001-26636 A | 30 January 2001 | (Family: none) | |
| WO 2021/241378 A1 | 02 December 2021 | US 2023/0174700 A1<br>EP 4159778 A1<br>CN 115698110 A<br>KR 10-2023-0015882 A<br>TW 202212388 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 63089540 A
- JP 2099521 A
- JP 2128336 A
- JP 2017031245 A
- JP 2011246583 A
- JP PATENTPUBLICATION B
- JP 2010143950 A
- JP 2011027940 A
- WO 2020250732 A